# EUROPEAN PATENT SPECIFICATION

(11) **EP 2 503 327 B1**
(45) Date of publication and mention of the grant of the patent: **18.12.2019**
(21) Application number: 12160622.2
(22) Date of filing: 21.03.2012
(51) Int. Cl.: G01N 27/404

(54) **Gas detector having bipolar counter/reference electrode**
Gasdetektor mit zweipoliger Gegen-/Referenzelektrode
Détecteur de gaz avec contre-électrode/électrode de référence bipolaire

(30) Priority: 25.03.2011 US 201113071893
(43) Date of publication of application: 26.09.2012
(73) Proprietor: Life Safety Distribution GmbH, 8610 Uster (CH)
(72) Inventor: Mitchell, Graeme Ramsay, Morristown, NJ 07962-2245 (US); Williamson, Martin, Morristown, NJ 07962-2245 (US); Chapples, John, Morristown, NJ 07962-2245 (US); Monsees, Frans, Morristown, NJ 07962-2245 (US)
(74) Representative: Haseltine Lake Kempner LLP

(56) References cited:
- EP-A1- 0 604 012
- GB-A- 2 326 485
- GB-A- 2 371 873
- JP-A- 2004 061 171
- JP-A- 2009 229 285
- US-A- 4 125 374
- US-A1- 2003 121 801
- US-A1- 2009 194 417

## Description

### FIELD

The application pertains to electro-chemical gas detectors. More particularly, the application pertains to such detectors which include electrode structures for improved detector performance.

### BACKGROUND

Electro-chemical gas sensors of various configurations are known. For example two electrode or three electrode structures can be combined with an appropriate electrolyte in a housing to provide compact, light weight gas sensor which can be combined with electronics and provided in an external housing in the form, for example, of a wearable gas detector.

While such detectors have been found to be extremely useful, at times, sensor output recovery, following exposure to a predetermined gas can take longer than desired. Preferably recovery times could be shortened with alternate configurations of various sensor elements.

GB 2326 485 discloses an electrochemical oxygen sensor. GB 2 371873 discloses an electrochemical gas sensor.

US4125374 discloses a wide range combustion mixture air/fuel ratio sensor in which an electrochemical cell supplies hydrogen gas to a palladium sensor element at a rate regulated by the output of a Wheatstone bridge circuit incorporating the sensor element. This generated hydrogen gas combines with any oxygen present in the exhaust gas through catalytic action and also maintains the level of absorbed hydrogen, and therefore the electrical resistance of the palladium sensor element, at a preselected value. The magnitude of the current applied to the electrochemical cell necessary to maintain this balance is a measure of the combustion mixture air/fuel ratio.

US20090194417A1 discloses an electrochemical sensor comprising sensing and counter electrodes and first (sensor) and second (reservoir) matrices of respectively different porosity, each matrix containing electrolyte, the surface of the first matrix adjacent and in contact with the second matrix having a catalytic coating applied thereto as sensing electrode and the electrolyte contained within the second matrix being capable of flow to or from the first matrix.

US20030121801A1 discloses an electrode having high activity to oxygen gas and low activity to flammable gas. An oxygen pump includes oxide-ion conductive solid electrolyte 2, electrode 8 which is an inactive electrode, and active electrode 10. Electrode 8 is an electrode that includes Ce0.8Sm0.2O2-alpha. Electrode 8 is disposed on the gas detection chamber 12 side of solid electrolyte 2. Active electrode 10 is disposed on the open space side of solid electrolyte 2. Gas detection chamber 12 is an enclosed space defined by solid electrolyte 2, insulation layers 6, and diffusion control layer 4.

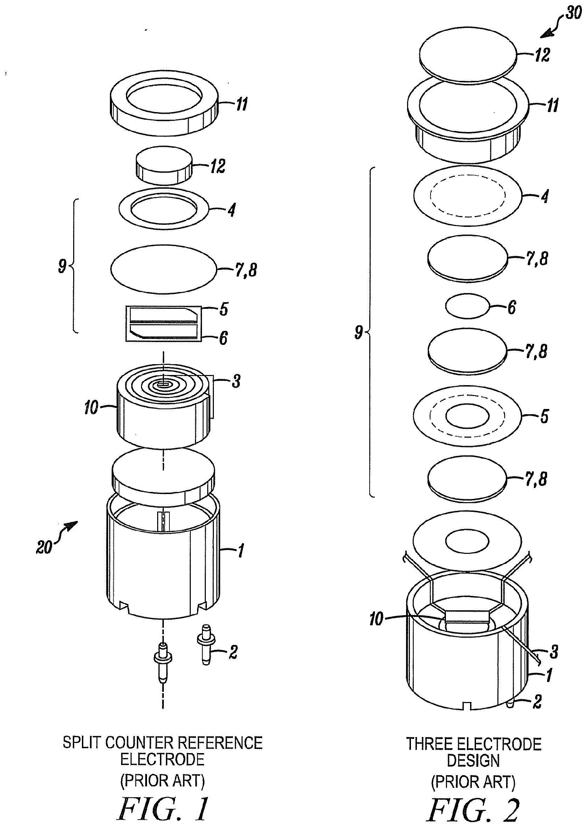

Figs.1, 2 illustrate characteristics of prior art gas sensors 20, 30. As illustrated therein, electrochemical cells include a body (1) that acts as mounting point for three connection pins (2) that allow electrical connection to the current collectors (3) and in turn electrical connection to the working electrode (4), Counter Electrode (5) and Reference Electrode (6).The Electrodes and current collectors are electrically isolated by insulation material between the electrodes (7). These insulators also act as a means of transporting / dispersing electrolyte (8) around the internal components of the cell. The Electrodes and insulators form the top stack assembly (9) which is supported by a bottom stack compressor (10). The stack cap (11) is fitted to the top of the body with a hole located in the front face. Depending on the gas being measured various filter materials (12) in the form of powders etc. are placed in the gas path between the cap and working electrode.

Fig.1 illustrates a prior art sensor 20 with a "Split counter reference" electrode (5), 6) facing the working electrode (4). This design benefits from a very short distance between the working, reference and counter electrodes minimizing the ionic impedance. The lower the impedance is, the faster the cell responds to a
change in gas concentration, which is advantageous. The disadvantage of this design is that with prolonged and or repeated gas application the reference electrode is exposed to products of the electrochemical reactions undertaken at the counter and working electrodes resulting in a change in reference potential. The effects of this shift are manifest as what is known by those skilled in the art as a "positive baseline offset" (zero offset). When the gas is removed it can take several minutes or even hours for the offset to return to zero as the reference electrode returns to its pre-gassed condition. The higher the gas concentration and or longer the duration or number of repeated gas applications, the longer the time it takes for the baseline to return to zero.

Fig. 2 illustrates a prior art three electrode sensor 30 where a small diameter reference electrode (6) faces the working electrode (4) and a counter electrode (5) faces upwards / downwards. A plastic doughnut ring is used to shield the working electrode (4) from the counter electrode (5) and separators (7) are used between the working electrode (4) and the reference electrode (6) and also between the reference electrode (6) and counter electrode (5). The sensor 30 benefits from preventing the H+ ions from reaching the counter electrode (5) and hence the concentration gradient is over a much longer distance than the alternative sensor 20 in Fig.1. This prevents the problem observed in the baseline behavior with the "Split Counter Reference" of Fig. 1. The disadvantage is that there are many insulators in the top stack which increases the ionic impedance and hence slows the cell's speed of response. Those knowledgeable in the art counter this by adding more electrolyte into the cell. However additional electrolyte may restrict the environmental window in which the cell can function without degradation in performance or potentially suffering from mechanical failure. This is due to the hygroscopic nature of the electrolyte which significantly increases in volume under conditions of high humidity. This failure mechanism is not always readily detected by the user and can potentially cause damage to the instrument in which the cell is housed.

The present invention in its various aspects is as set out in the appended claims.

### BRIEF DESCRIPTION OF THE DRAWINGS

Fig. 1 is an exploded view of a three electrode prior art sensor;
Fig. 2 is an exploded view of another three electrode prior art sensor;
Fig. 3 is an exploded view of a three electrode sensor in accordance herewith
Fig. 4 illustrates additional details of bi-polar electrodes in accordance herewith;
Figs. 5A, 5B, 5C illustrate performance characteristics of sensors as in Fig. 3; and
Fig. 6 illustrates a gas detector which incorporates a gas sensor as in Fig. 3.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated. The present invention is defined by the appended claims; any disclosure not falling within the scope of the claims is presented for illustrative purposes only.

Advantageously, in accordance with the present disclosure, the position / orientation of internal electrodes can be altered. Changing the position of the counter electrode in relation to the working/sensing electrode, with the counter facing away from the working electrode, as disclosed below, can produce improved sensor performance. However, merely moving the counter electrode away from the working/sensing electrode can result in a detrimental impact on other specified sensor performance characteristics, especially at temperature extremes (sensor baseline in air, sensitivity to target gas & response time - due to the increase in ionic impedance associated with moving the counter electrode).

There are also additional manufacturing issues associated with altering electrode positions. Known designs include counter & reference electrode catalyst deposited adjacent to each other on the same surface of a common substrate material.

Moving the counter electrode requires the counter and reference electrodes to be separated, requiring additional electrode substrate material (PTFE) and additional electrode separator material (Glass Fiber) - increasing direct cost of product, and increasing manufacturing complexity, with potential introduction of failure modes due to incorrect component placement poorly aligned separators / electrodes leading to shorting between electrodes. Changing the orientation of the counter electrode (to face away from working electrode) also introduces new manufacturing issues as there is no visibility of the catalyst pad during cutting and placement of the electrode.

Unlike merely moving the location of electrodes relative to one another, by creating a bipolar electrode as claimed and described below, the baseline recovery performance characteristic of the sensor can be improved.

The inventive electrode is designed so that the counter and reference electrode catalyst pads are deposited on either side of the same insulating substrate, for example, a PTFE planar member. This design (compared to the alternative of using two separate counter and reference electrodes) benefits from not requiring an additional separator between the counter and reference electrodes. This reduces ionic impedance; improving baseline recovery performance and sensor response time (especially at low temperatures). Removing the requirement for an additional separator and having a common substrate for the electrodes reduces piece parts / direct product cost - also improving manufacturability with fewer opportunities for failure.

As counter and reference electrodes face in opposite directions, using a shared substrate with back to back catalyst is beneficial for manufacturing as visibility of one catalyst pad ensures correct cutting and placement of components, and removes failure modes associated with electrode shorting. Additionally, as the electrodes are on a shared substrate, there will be faster temperature stabilization between the electrodes. Another manufacturing benefit is that by having a common carrier for the counter and reference electrodes, the orientation of the bipolar electrode has no effect on performance and facilitates manufacturing poke-yoke design.

A PTFE (substrate) sheet, or other type of insulating, or plastic sheet, can be clamped between two magnetic steel stencils, with electrode stencils aligned on each side, and stencils are loaded onto transfer plate using location reference pins for alignment and held flat using magnets. Catalyst material is then dispensed using an automated robotic dispensing system and cured. One such method is disclosed in US Patent No. 7,794,779 entitled "Method of Manufacturing Gas Diffusion Electrodes, which issued Sept. 14, 2010, and which is commonly owned.

The stencils are then removed from the transfer plate (whilst still clamping the substrate material), the stencils are turned over so the substrate surface with no catalyst is topmost. The stencils are loaded back onto the transfer plate (location pins ensure electrodes are aligned on both sides of sheet), the electrode catalyst for the second electrode is then dispensed and cured.

Stencils enable up to 144 electrodes, or more, to be dispensed per substrate sheet. The electrodes are then built into product on an automated assembly machine. Electrode sheets (144 electrodes per sheet) are loaded onto the assembly machine, and a vision system detects the location of individual electrodes to ensure correct cutting position (alignment of electrodes achieved at manufacture ensures that the electrode on opposite side of substrate is also cut correctly).

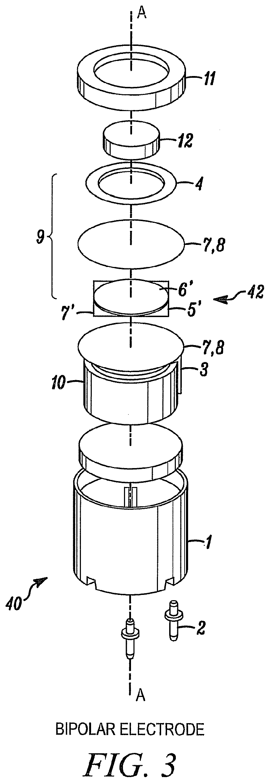

Fig. 3 illustrates a sensor 40 in accordance herewith that overcomes the deficiencies of the current art shown in Figs. 1 & 2. The "Bipolar electrode" (42) of Fig. 3 has the reference electrode (6') and the counter electrode (5') located on a common insulating substrate (7'). The electrodes are positioned "back to back" on the substrate (7'). Forming the reference and counter electrodes (6'), (5') on the same substrate (7') ensures that the catalyst pads are in very close thermal proximity and hence any changes in the counter electrode activity / potential due to temperature are more quickly compensated for in the reference electrode (6').

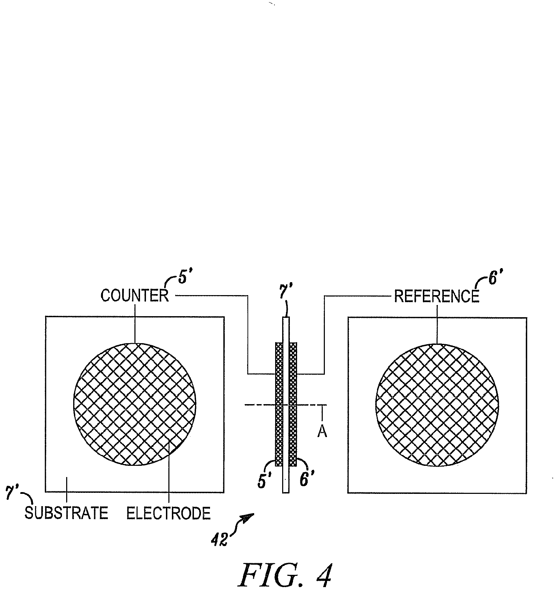

In the sensor 40, a common axial line A (best seen in Fig. 4) extends through each of the counter electrode (5), the reference electrode (6) and the insulating substrate (7'). Where the electrodes are substantially identical in shape, the line A comprises a common center line. It will be understood that the electrodes (5'), (6') could have differing shapes without departing from the spirit and scope hereof.

Further the catalyst pad activities in the reference and counter are "tuned" to give the cell particular performance characteristics. As a result of sequentially applying the catalyst pads, the pads can be precisely matched / aligned. Hence, less variation is observed between cells of this design as opposed to those where the reference and counter are on separate substrates. One benefit, over the "split counter reference electrode" of sensor 20 of Fig. 1, is that there is a larger substrate to mount the reference and counter electrode pads. This allows the cell performance to be more easily customized / tuned for cost / performance and hence beneficial to manufacturers of the art.

Another benefit, over the prior art of Fig.2, is that there is one less separator; and hence, no requirement for a plastic doughnut shaped shield between the working and counter electrode. This significantly reduces the ionic impedance and hence the speed of response is comparable with the design of the prior art shown in figure 1, at ambient temperatures.

The sensor 40, in the disclosed embodiment, has a reference catalyst pad that is matched in diameter and loading to the counter, ensuring the component is poke / yoke (i.e., reference and counter catalyst pads are identical; hence orientation is not of importance during assembly). The bipolar electrode (42) also brings significant commercial advantage over the prior art, shown in Fig. 2 as one less plastic substrate is required to support the electrode catalyst, no plastic doughnut seal / guard is required and some separators are eliminated compared to the sensor 30 shown in Fig. 2.

The bipolar electrode (42) also brings significant reduction in the number of parts. A simpler design means there is a reduction in the potential number of defects from misplaced insulators and hence short circuits/bad connections in the electro-chemical cell.

Fig. 4 illustrates details of the design of the bipolar electrode (42) usable in a carbon monoxide electro-chemical cell. The electrode substrate could be larger or smaller or a different shape to that shown in Fig. 4, without limitation. Similarly the catalyst pads which are shown round, could be square or in fact any shape. The loading per unit area of the catalyst pad can be larger or smaller than as in the example of Fig. 4. Similarly, the counter and reference electrodes (5'), (6') could equally be larger or smaller than as illustrated in Fig. 2 and while preferably having the same diameter and loading, they could be tuned to meet different performance characteristics. The axial line A, which might be a common center line, extends therethrough.

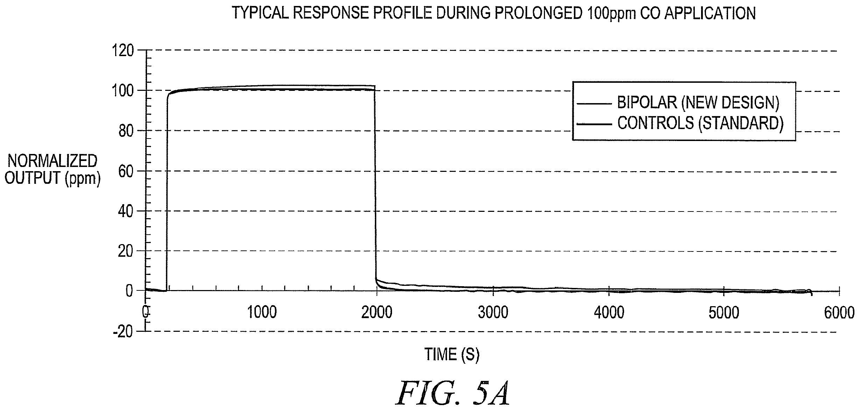

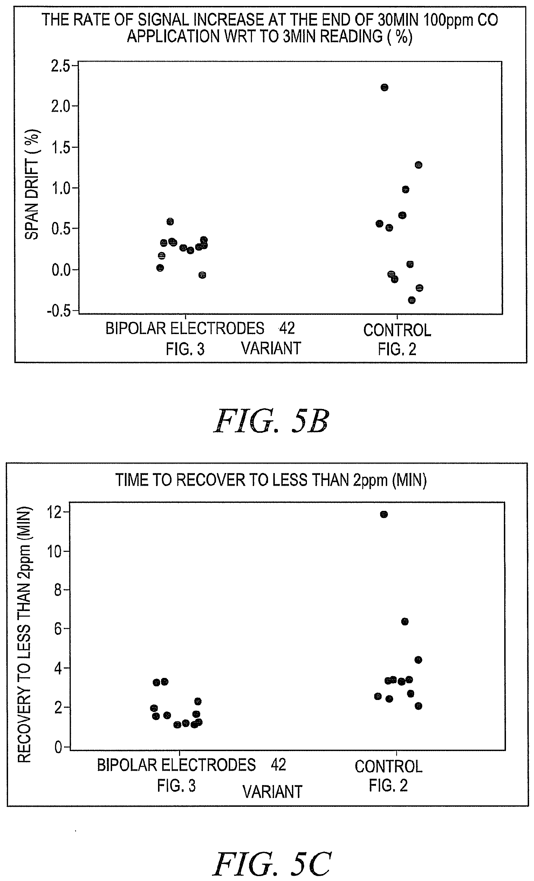

Figs. 5A, 5B, 5C illustrate performance aspects of the sensor 40 of Fig. 3 compared to sensor 30 of Fig. 2. Bipolar electrodes, such as electrodes (42), exhibit tighter span drift characteristics and tighter, shorter, recovery times to carbon monoxide when compared to control sensors 30 of Fig. 2.

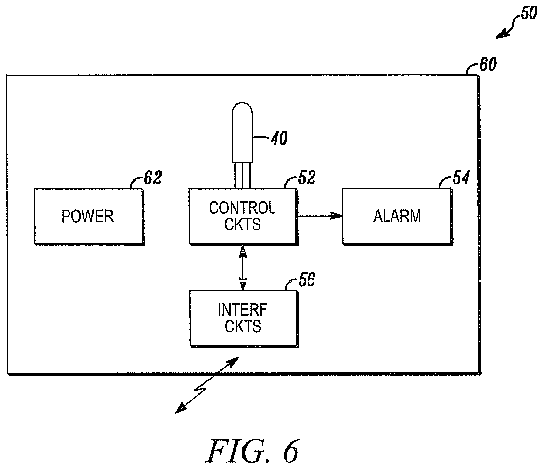

Fig. 6 illustrates a gas detector 50 which includes the gas sensor 40. The detector 50 includes control circuits 52 coupled to the gas sensor 40. The control circuits 52 are coupled to an alarm output 54, audible or visual, as well as interface circuits 56. Circuits 56 can place the detector 50 into bidirectional wired or wireless communication with an external regional monitoring system or a docking station. The above components can be carried in a housing 60, which, could be carried by a user, and power by a supply 62, for example a battery.

From the foregoing, it will be observed that numerous variations and modifications may be effected without departing from the scope of the invention. It is to be understood that no limitation with respect to the specific apparatus illustrated herein is intended or should be inferred. It is, of course, intended to cover by the appended claims all such modifications as fall within the scope of the claims.

## Claims

1. An electro-chemical gas detector (50) comprising:
a gas sensor (40) having a working electrode, a bipolar electrode (42), wherein the bipolar electrode comprises a common insulating substrate (7') and counter (5) and reference (6) electrode catalyst pads formed thereon,
wherein the counter and reference electrode catalyst pads are deposited on either side of the same insulating substrate to face in opposite directions, and wherein the bipolar electrode is arranged such that the counter electrode is facing away from the working electrode; and
a housing (1) which carries the sensor.

2. The electro-chemical gas detector as in claim 1 wherein the common insulating substrate has first and second planar surfaces with the electrodes formed on respective ones of the surfaces.

3. The electro-chemical gas detector as in claim 1 where the electrodes are selected from a class which includes at least a cylindrical profile, a square profile, or a rectangular profile.

4. The electro-chemical gas detector as in claim 1 where the electrodes are arranged along a common center line.

5. The electro-chemical gas detector as in claim 1 where the electrodes are symmetrical with respect to a common axially extending line.

6. The electro-chemical gas detector as in claim 5 where the axially extending line comprises a common center line that also passes through the common substrate and is substantially perpendicular thereto.

7. The electro-chemical gas detector as in claim 6 where the housing extends generally parallel to the common center line.

8. The electro-chemical gas detector as in claim 5 which includes control circuits (52) coupled to the sensor and wherein the control circuits, responsive to signals from the sensor, determine the presence of a selected gas.

9. The electro-chemical gas detector as in claim 8 which includes a cylindrical insulator positioned adjacent to each of the electrodes and the common substrate.

10. The electro-chemical gas detector as in claim 1 further comprising:
a stack compressor (10) carried in the housing, wherein the housing is an elongated hollow housing (60);
a first insulating layer (7,8) overlying an end of the stack compressor;
wherein the bipolar electrode (42) overlays the first insulating layer; and
a third insulating layer (7,8) which overlays the bipolar electrode.

11. The electro-chemical gas detector as in claim 10 where the electrode pads are formed on the common insulating substrate with identical shapes.

12. The electro-chemical gas detector as in claim 10 where the common insulating substrate comprises a planar insulating sheet member.

13. The electro-chemical gas detector as in claim 10 which includes a selected electrolyte located at least on each side of the composite electrode structure.

14. The electro-chemical gas detector as in claim 13 which includes a plurality of contacts, which extend from the housing adjacent to the stack compressor, the contacts are coupled to the electrodes.

15. The electro-chemical gas detector as in claim 10 where the common insulating substrate comprises a planar PTFE sheet member.

## Patentansprüche

1. Elektrochemischer Gasdetektor (50), der Folgendes umfasst:
einen Gassensor (40), der eine Arbeitselektrode und eine Bipolarelektrode (42) besitzt, wobei die Bipolarelektrode ein gemeinsames Isolationssubstrat (7') und ein Gegenelektrodenkatalysator-Pad (5) und ein Bezugselektrodenkatalysator-Pad (6), die auf ihm gebildet sind, umfasst, wobei
das Gegenelektrodenkatalysator-Pad und das Bezugselektrodenkatalysator-Pad auf beiden Seiten desselben Isolationssubstrats derart abgelagert sind, dass sie in gegenüberliegende Richtungen weisen, und die Bipolarelektrode derart ausgelegt ist, dass die Gegenelektrode von der Arbeitselektrode abgewandt ist; und
ein Gehäuse (1), das den Sensor trägt.

2. Elektrochemischer Gasdetektor nach Anspruch 1, wobei das gemeinsame Isolationssubstrat eine erste und eine zweite ebene Oberfläche besitzt und die Elektroden auf entsprechenden Oberflächen gebildet sind.

3. Elektrochemischer Gasdetektor nach Anspruch 1, wobei die Elektroden aus einer Klasse gewählt sind, die mindestens ein zylindrisches Profil, ein quadratisches Profil oder ein rechteckiges Profil enthält.

4. Elektrochemischer Gasdetektor nach Anspruch 1, wobei die Elektroden entlang einer gemeinsamen Mittellinie angeordnet sind.

5. Elektrochemischer Gasdetektor nach Anspruch 1, wobei die Elektroden in Bezug auf eine gemeinsame axial verlaufende Linie symmetrisch sind.

6. Elektrochemischer Gasdetektor nach Anspruch 5, wobei die axial verlaufende Linie eine gemeinsame Mittellinie umfasst, die außerdem durch das gemeinsame Substrat verläuft und im Wesentlichen zu ihm senkrecht ist.

7. Elektrochemischer Gasdetektor nach Anspruch 6, wobei das Gehäuse im Wesentlichen zur gemeinsamen Mittellinie parallel verläuft.

8. Elektrochemischer Gasdetektor nach Anspruch 5, der Steuerschaltungen (52) enthält, die an den Sensor gekoppelt sind, wobei die Steuerschaltungen in Reaktion auf Signale vom Sensor das Vorliegen eines gewählten Gases bestimmen.

9. Elektrochemischer Gasdetektor nach Anspruch 8, der einen zylindrischen Isolator enthält, der angrenzend an jede der Elektroden und das gemeinsame Substrat positioniert ist.

10. Elektrochemischer Gasdetektor nach Anspruch 1, der ferner Folgendes umfasst:
einen Stapelkompressor (10), der im Gehäuse getragen wird, wobei das Gehäuse ein langgestrecktes, hohles Gehäuse (60) ist;
eine erste Isolationsschicht (7, 8), die ein Ende des Stapelkompressors überlagert; wobei
die Bipolarelektrode (42) die erste Isolationsschicht überlagert; und
eine dritte Isolationsschicht (7, 8), die die Bipolarelektrode überlagert.

11. Elektrochemischer Gasdetektor nach Anspruch 10, wobei die Elektrodenpads mit identischen Formen auf dem gemeinsamen Isolationssubstrat gebildet sind.

12. Elektrochemischer Gasdetektor nach Anspruch 10, wobei das gemeinsame Isolationssubstrat ein ebenes Isolationsplattenelement umfasst.

13. Elektrochemischer Gasdetektor nach Anspruch 10, der einen gewählten Elektrolyten, der sich mindestens auf beiden Seiten der Verbundelektrodenstruktur befindet, enthält.

14. Elektrochemischer Gasdetektor nach Anspruch 13, der mehrere Kontakte enthält, die sich an den Stapelkompressor angrenzend vom Gehäuse erstrecken, wobei die Kontakte an die Elektroden gekoppelt sind.

15. Elektrochemischer Gasdetektor nach Anspruch 10, wobei das gemeinsame Isolationssubstrat ein ebenes PTFE-Plattenelement umfasst.

## Revendications

1. Détecteur de gaz électrochimique (50) comprenant :
un capteur de gaz (40) ayant une électrode de travail, une électrode bipolaire (42), l'électrode bipolaire comprenant un substrat isolant commun (7') et des pastilles de catalyseur de contre-électrode (5) et d'électrode de référence (6) formées sur celui-ci,
les pastilles de catalyseur de contre-électrode et d'électrode de référence étant déposées sur chaque côté du même substrat isolant pour être tournées dans des directions opposées, et l'électrode bipolaire étant agencée de telle sorte que la contre-électrode est dirigée à l'opposé de l'électrode de travail ; et
un boîtier (1) qui porte le capteur.

2. Détecteur de gaz électrochimique selon la revendication 1 dans lequel le substrat isolant commun a des première et deuxième surfaces planes avec les électrodes respectivement formées sur l'une et l'autre de ces surfaces.

3. Détecteur de gaz électrochimique selon la revendication 1 dans lequel les électrodes sont sélectionnées dans une classe qui comporte au moins un profil cylindrique, un profil carré, ou un profil rectangulaire.

4. Détecteur de gaz électrochimique selon la revendication 1 dans lequel les électrodes sont disposées le long d'une ligne centrale commune.

5. Détecteur de gaz électrochimique selon la revendication 1 dans lequel les électrodes sont symétriques par rapport à une ligne commune s'étendant axialement.

6. Détecteur de gaz électrochimique selon la revendication 5 dans lequel la ligne s'étendant axialement comprend une ligne centrale commune qui passe également à travers le substrat commun et est sensiblement perpendiculaire à celui-ci.

7. Détecteur de gaz électrochimique selon la revendication 6 dans lequel le boîtier s'étend généralement parallèlement à la ligne centrale commune.

8. Détecteur de gaz électrochimique selon la revendication 5 qui comporte des circuits de commande (52) couplés au capteur, et dans lequel les circuits de commande, en réponse à des signaux provenant du capteur, déterminent la présence d'un gaz sélectionné.

9. Détecteur de gaz électrochimique selon la revendication 8 qui comporte un isolant cylindrique positionné adjacent à chacune des électrodes et au substrat commun.

10. Détecteur de gaz électrochimique selon la revendication 1 comprenant en outre :
un compresseur d'empilement (10) porté dans le boîtier, le boîtier étant un boîtier creux allongé (60) ;
une première couche isolante (7, 8) recouvrant une extrémité du compresseur d'empilement ;
dans lequel l'électrode bipolaire (42) recouvre la première couche isolante ; et
une troisième couche isolante (7, 8) qui recouvre l'électrode bipolaire.

11. Détecteur de gaz électrochimique selon la revendication 10 dans lequel les pastilles d'électrode sont formées sur le substrat isolant commun avec des formes identiques.

12. Détecteur de gaz électrochimique selon la revendication 10 dans lequel le substrat isolant commun comprend un élément en forme de feuille plane isolante.

13. Détecteur de gaz électrochimique selon la revendication 10 qui comporte un électrolyte sélectionné situé au moins sur chaque côté de la structure d'électrode composite.

14. Détecteur de gaz électrochimique selon la revendication 13 qui comporte une pluralité de contacts, qui s'étendent depuis le boîtier adjacent au compresseur d'empilement, les contacts étant couplés aux électrodes.

15. Détecteur de gaz électrochimique selon la revendication 10 dans lequel le substrat isolant commun comprend un élément en forme de feuille plane de PTFE.
